(19) Europäisches Patentamt
European Patent Office
Office européen des brevets

(11) EP 3 559 178 B1

(12) **FASCICULE DE BREVET EUROPEEN**

(45) Date de publication et mention de la délivrance du brevet:
**20.07.2022 Bulletin 2022/29**

(21) Numéro de dépôt: **17829223.1**

(22) Date de dépôt: **18.12.2017**

(51) Classification Internationale des Brevets (IPC):
***C10M 169/04*** *(2006.01)* ***B29D 30/06*** *(2006.01)*
***B29C 33/64*** *(2006.01)* ***B29C 37/00*** *(2006.01)*
***C10M 173/02*** *(2006.01)* ***C10M 107/50*** *(2006.01)*

(52) Classification Coopérative des Brevets (CPC):
**C10M 173/02; B29C 33/64; B29C 37/0067; B29D 30/0654; C10M 107/50; C10M 169/044;**
B29D 2030/0655; C10M 2201/02; C10M 2201/04; C10M 2201/102; C10M 2201/103; C10M 2201/12; C10M 2207/123; C10M 2209/104; C10M 2209/12;

(Cont.)

(86) Numéro de dépôt international:
**PCT/FR2017/000247**

(87) Numéro de publication internationale:
**WO 2018/115600 (28.06.2018 Gazette 2018/26)**

(54) **COMPOSITION À BASE DE POLYORGANOSILOXANES DESTINÉE AU MOULAGE-DÉMOULAGE DE PNEUMATIQUES**

ZUSAMMENSETZUNG AUF POLYORGANOSILOXANBASIS ZUM FORMEN/ENTFORMEN VON REIFEN

POLYORGANOSILOXANE-BASED COMPOSITION INTENDED FOR TYRE MOULDING/STRIPPING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1601828**

(43) Date de publication de la demande:
**30.10.2019 Bulletin 2019/44**

(73) Titulaire: **ELKEM SILICONES France SAS**
**69003 Lyon (FR)**

(72) Inventeurs:
- **PAILLOT, Karine**
**69390 Charly (FR)**
- **GUICHARD, Gérald**
**69700 Givors (FR)**

(74) Mandataire: **Mekki, Boualem**
**Elkem Silicones France SAS**
**9, rue Spécia**
**69190 Saint-Fons (FR)**

(56) Documents cités:
**WO-A1-2015/090547**

- **Www Sovitec Com: "Technical Data Sheet ENGINEERING PLASTICS I Fillers I Microperl I Main use I Top fillers for engineering plastics I Chemical composition I Soda lime glass I Particle size distribution I", , 1 janvier 2016 (2016-01-01), XP055405008, Extrait de l'Internet: URL:http://www.sovitec.com/sites/sovitec/f iles/2016-06/Sovitec_TDS_En_Microperl_1.pd f [extrait le 2017-09-08]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
C10M 2219/104; C10M 2223/042; C10M 2229/025;
C10M 2229/041; C10M 2229/042;
C10M 2229/0465; C10M 2229/0515;
C10N 2010/02; C10N 2010/06; C10N 2020/02;
C10N 2030/06; C10N 2040/36

## Description

La présente invention concerne des compositions sous forme d'émulsion d'huiles silicones destinées à être appliquées sur des vessies de vulcanisation et/ou sur des bandages pneumatiques ou semi-pneumatiques, pour faciliter le moulage-démoulage lors de la fabrication de pneumatiques.

L'invention concerne en particulier une application en tant que composition lubrifiante particulièrement appropriée à la lubrification des vessies de vulcanisation utilisées lors du façonnage et de la vulcanisation de bandages pneumatiques ou semi-pneumatiques.

L'invention concerne également les vessies de vulcanisation revêtues d'une composition lubrifiante et/ou d'un primaire d'accrochage selon l'invention ainsi que les bandages pneumatiques ou semi-pneumatiques revêtus de ladite composition lubrifiante.

Enfin, la présente invention concerne un procédé de lubrification d'une vessie en caoutchouc dilatable utile lors d'une vulcanisation d'un pneu cru au sein d'une presse métallique caractérisé en ce que des compositions sous forme d'émulsions d'huiles silicones sont appliquées sur la surface interne des pneumatiques crus et/ou à la surface externe des vessies de vulcanisation pour en faciliter le moulage-démoulage lors de la fabrication des dits-pneumatiques.

La fabrication d'un pneumatique comporte principalement trois étapes à savoir la préparation des produits semi-finis, l'assemblage de ces derniers et la cuisson de l'enveloppe.

La préparation des produits semi-finis consiste à élaborer les constituants de l'enveloppe : gommes, nappes textiles et métalliques, tringles.

L'étape d'assemblage consiste à superposer les différents produits semi-finis, en vue de constituer le pneumatique. La carcasse, constituée de différentes couches internes : gomme intérieure, nappe carcasse, tringles, et toutes les nappes de gommes, est placée sur un cylindre au diamètre du pneu : le tambour. Après conformation, le tambour faisant prendre à la carcasse son aspect torique, les nappes de ceinture et la bande de roulement sont posées : un pneu cru, enveloppe non vulcanisée et non façonnée, encore plastique est obtenu. A la fin de l'étape d'assemblage, le futur pneumatique est aussi appelé bandage cru ou enveloppe crue. Sa cohésion est garantie simplement par le collant à cru des produits.

Enfin, la cuisson fait passer le pneu de l'état plastique à l'état élastique grâce à la constitution de ponts de soufre entre les chaînes d'élastomères : c'est la vulcanisation. La cuisson crée la structure composite entre les différents éléments de l'enveloppe. Les mélanges collent entre eux, les nappes et les fils se mêlent. La vulcanisation en moule se réalise dans des presses métalliques en utilisant l'action combinée de la chaleur et de la pression. Le bandage cru ou pneu cru est chauffé simultanément à l'extérieur, par exemple avec de la vapeur circulant à l'intérieur des parois du moule et à l'intérieur, en règle générale avec un fluide chaud sous pression contenu dans une membrane de caoutchouc, appelée aussi vessie dilatable.

Le fluide chaud tel qu'un gaz chaud, de l'eau chaude et/ou de la vapeur, participe au transfert de chaleur pour la vulcanisation.

La pression généralement supérieure à 10 bars, usuellement entre 15 et 25 bars, sert à comprimer le pneumatique de l'intérieur et à l'appliquer contre le moule de façon à ce qu'il puisse prendre la forme, les sculptures et les inscriptions qui ont été gravées dans le dit-moule métallique.

Le temps de vulcanisation varie en fonction des dimensions du pneumatique, des techniques opératoires et des mélanges utilisés : il est d'environ 15 minutes pour un pneumatique d'automobile et peut atteindre 24 heures ou plus pour des gros pneumatiques destinés aux engins de terrassement. La température de vulcanisation est en général comprise entre 80 et 220°C.

Cette opération fait perdre au mélange de caoutchouc sa plasticité initiale en lui donnant des propriétés élastiques stables.

L'enveloppe est alors partiellement refroidie dans le moule, ce refroidissement étant parfois favorisé par l'introduction d'eau froide ou plus fraîche dans la vessie. Puis le moule est ouvert et la vessie est dégonflée en relâchant la pression du fluide interne et le pneu vulcanisé est retiré de la presse. Cette utilisation des vessies de vulcanisation est bien connue dans la technique.

Il est admis qu'il se produit un mouvement relatif notable entre la surface de contact externe de la vessie et la surface interne de l'enveloppe crue au cours de la phase de dilatation de la vessie avant la vulcanisation complète de l'enveloppe. De même, il se produit également un mouvement relatif considérable entre la surface de contact externe de la vessie et la surface interne de l'enveloppe moulée et vulcanisée, et cela au cours du dégonflement de la vessie et de l'extraction du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe pendant la cuisson. Après la vulcanisation de l'enveloppe et notamment au cours de la partie finale du cycle de vulcanisation de l'enveloppe au cours de laquelle la vessie est dégonflée, celle-ci reste alors

indissociablement collé sur le pneumatique.

Il s'agit de démouler deux surfaces en caoutchouc à savoir la surface interne du pneu vulcanisé de la surface externe de la vessie et non pas la surface externe du pneu vulcanisé de la surface interne du moule métallique. EP022706 décrit un agent pour le moulage d'objets en caoutchouc à déposer sur la surface externe de l'ébauche en caoutchouc en contact avec le moule.

De plus, la vessie doit pouvoir être réutilisée sans nouveau traitement pour d'autres cycles moulage/démoulage. Pour cette raison, la surface externe de la vessie ou la surface interne de l'enveloppe crue ou non vulcanisée est revêtue d'un lubrifiant ou agent de démoulage approprié.

L'utilisation d'un agent de démoulage, multi-démoulages, permet aux fabricants de pneumatiques d'améliorer la productivité en réduisant la vitesse d'apparition des défauts et en diminuant la fréquence des traitements par le dit-agent de démoulage.

La lubrification de la vessie de vulcanisation utilisée lors du façonnage et de la vulcanisation des pneus crus peut être réalisée de deux façons différentes.

La vessie en caoutchouc dilatable utilisée lors de la vulcanisation des pneus crus est initialement revêtue d'une composition lubrifiante. La lubrification de la vessie est directe.

Selon une alternative, l'agent de démoulage est appliqué sur l'intérieur du pneu cru qui sera en contact avec la vessie dilatable. Puis, le pneu cru est introduit à l'intérieur de la presse. Le moule est refermé et la vessie est gonflée. L'agent de démoulage assure le centrage optimal de la vessie à l'intérieur du pneu ce qui est nécessaire à l'obtention de pneus parfaitement symétriques. Il aide aussi à éviter des défauts de la vessie tels que des pincements et des plissements. Quand le moule métallique est fermé et la vessie totalement déployée, la température est augmentée jusqu'à 220°C. Durant cette phase, l'agent de démoulage doit être résistant à la température et doit transférer, de la face interne du pneu sur la face externe de la vessie. Ce transfert est souhaitable pour augmenter le nombre de démoulages successifs sans nouvelle application de l'agent de démoulage. Le pneu est vulcanisé dans la presse fermée, avec la vessie complétement déployée par un fluide sous pression et cela entre 150 et 220°C. Durant cette étape, le pneu ne doit pas coller à la vessie. Le film d'agent de démoulage forme la barrière nécessaire entre le pneu et la vessie. L'effet anti-collage de l'agent de démoulage est assuré par la création d'une couche continue de séparation entre la vessie et la face interne du pneu. C'est la fonction principale d'un agent de démoulage de vessie. Si la barrière a des défauts, la vulcanisation du pneu peut s'effectuer sur le caoutchouc de la vessie, rendant la séparation des deux, impossible sans rupture destructrice. Après vulcanisation, la vessie est dégonflée. L'agent de démoulage doit assurer l'effet anti-collage, permettant à la vessie de se décoller du pneu. L'agent de démoulage permettant plusieurs démoulages n'est pas appliqué sur chaque pneu. Il doit donc avoir une durabilité élevée. La durabilité de la couche d'agent de démoulage est ce qui rend l'agent de démoulage, multi-démoulages. L'agent de démoulage est à nouveau appliqué après un certain nombre de cycles de moulage/démoulage.

L'avantage de l'application de l'agent de démoulage sur l'intérieur du pneu cru est que celle- ci s'effectue en dehors de la presse évitant ainsi toute pollution intempestive de celle-ci.

Les compositions silicones réticulables en élastomère pour faciliter le moulage-démoulage lors de la fabrication de pneumatiques sont connues.

Ainsi les brevets EP1240283, EP1495076 et EP2038354 concernent des compositions lubrifiantes à base de siloxanes capables de réticuler par polycondensation et ne dégageant donc pas d'hydrogène.

La demande de brevet EP1899447 et le brevet US4840742 concernent des compositions silicones capables de réticuler par deshydrogénocondensation.

La demande de brevet WO2015090547 concerne un procédé de lubrification d'une vessie en caoutchouc dilatable utile lors d'une vulcanisation d'un pneu cru au sein d'une presse métallique caractérisé en ce que des compositions sous forme d'émulsions d'huiles silicones comprenant des billes de verre en tant que charge amorphe sphérique sont appliquées sur la surface interne des pneumatiques crus et/ou à la surface externe des vessies de vulcanisation pour en faciliter le moulage-démoulage lors de la fabrication des dits-pneumatiques. Toutefois, la présence de billes de verre favorable à l'évacuation d'air lors de l'étape de façonnage et de vulcanisation des pneumatiques a tendance à diminuer la stabilité des émulsions en termes de pH et de perte des fonctions ≡SiH.

Le document intitulé « Materials-Handling-Guide-Hydrogen-Bonded-Silicon-Compounds » publié en août 2007 par le SEHCS (Silicones Environmental, Health and Safety Council of North America) concerne la sécurité des produits contenant des ≡SiH.

Il est connu de l'homme de l'art que la liaison silicium-hydrogène est extrêmement réactive d'autant plus en présence d'eau par exemple d'une émulsion. Cette réaction d'hydrolyse peut être accélérée en présence d'autres composés chimiques comme par exemple des acides ou des bases. Elle peut être très rapide et fortement exothermique. Cette réaction d'hydrolyse libère de l'hydrogène inflammable comme sous-produit :

$$\equiv SiH + H_2O \rightarrow \equiv SiOH + H_2\ (g)$$

L'hydrogène dégagé peut former des mélanges explosifs avec l'air.
Aussi une fuite intempestive d'hydrogène gazeux peut entrainer des risques graves pour la santé et la sécurité des opérateurs ainsi que des installations industrielles et doit donc être maitrisée. Il est très important de contrôler le pH des émulsions aqueuses de poly (méthylhydrogène) siloxanes pour minimiser la libération d'hydrogène.

Dans ce contexte, la stabilité des émulsions lubrifiantes à base respectivement d'agent réticulant ayant des fonctions ≡SiH et de billes de verre doit être sans cesse améliorée tout en conservant les propriétés de lubrification à savoir des propriétés de glissement et de résistance aux démoulages successifs.

Un objectif de la présente invention est de fournir des compositions d'agent de démoulage à stabilité améliorée au stockage en termes de pH et de perte de ≡SiH permettant d'obtenir une vessie répondant simultanément à ces besoins à savoir des propriétés de glissement et de résistance aux démoulages successifs.

A cet effet, le premier objet de l'invention concerne une composition d'agent de démoulage **(I)** sous forme d'émulsion comprenant :

**(a)** au moins un polyorganosiloxane réactif **(A)** comportant par molécule au moins deux groupements silanols ≡SiOH ;
**(b)** au moins un agent réticulant **(B)** ayant, par molécule, au moins trois motifs ≡SiH ;
**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
**(d)** de 0,1 à 20 parties en poids de billes de verre **(D)** en tant que charge amorphe sphérique ;
**(e)** au moins un tensioactif **(E)** ;
**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
**(g)** éventuellement au moins un catalyseur de déshydrogéno-condensation **(G)** ; et
**(h)** de l'eau **(H)** ;

les quantités de tensioactif(s) et d'eau étant suffisantes pour l'obtention d'une émulsion huile-dans-eau;
caractérisée en ce que la composition des billes de verre **(D)** est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO.

La composition des billes de verre **(D)** peut être établie par Spectrométrie d'Emission Atomique par Torche à Plasma selon la Norme ISO 21587 (2007).

La composition d'agent de démoulages **(I)** peut être obtenue par mélange d'émulsions contenant comme constituants majoritaires les constituants **(A), (B)** et **(C)** seuls ou en mélange.

Par composition stable, on entend ici une composition dont le pH n'augmente pas au stockage de plus de 10% relatif durant une période de 60 jours à 50°C, conditions de test de vieillissement accéléré classiquement admis par l'homme de l'art comme équivalentes à un an de vieillissement à température ambiante.

L'amélioration de la stabilité de l'émulsion obtenue grâce à l'invention se traduit directement par un pH plus stable au sens de l'invention et donc moins d'hydrogène libéré ce qui signifie une chute significative de la perte des SiH.

Pour décrire les polyorganosiloxanes, on parle de motifs M, D, T, Q. La lettre M représente l'unité monofonctionelle de formule $(R)_3SiO_{1/2}$, l'atome de silicium étant relié à un seul atome d'oxygène dans le polymère comprenant cette unité. La lettre D signifie une unité difonctionnelle $(R)_2SiO_{2/2}$ dans laquelle l'atome de silicium est relié à deux atomes d'oxygène. La lettre T représente une unité trifonctionnelle de formule $(R)SiO_{3/2}$, dans laquelle l'atome de silicium est relié à trois atomes d'oxygène. La lettre Q représente une unité trifonctionnelle de formule $SiO_{4/2}$, dans laquelle l'atome de silicium est relié à quatre atomes d'oxygène. Le symbole R a la même définition que les symboles $R^2$, $R^3$ et $R^4$ définis ci-dessous. Les motifs M, D, T peuvent être fonctionnalisés. On parle alors de motifs M, D, T tout en précisant les radicaux spécifiques.

De préférence, le polyorganosiloxane réactif **(A)** de la composition d'agent de démoulage **(I)** comprend les motifs siloxyles suivants :

$M^{OH} = [(OH)(R^2)_2SiO_{1/2}]$ et $D= [R^3R^4SiO_{2/2}]$

dans lesquels:
$R^2$, $R^3$ et $R^4$ sont des radicaux, identiques ou différents, choisis parmi le groupe constitué par :

- les radicaux alkyles linéaires ou ramifiés en $C_1$-$C_6$ tels que par exemple méthyle, éthyle, propyle, isopropyle, butyle, isobutyle, t-butyle, n-pentyle, n-hexyle,
- les radicaux cycloalkyles en $C_3$-$C_8$ tels que par exemple cyclopentyle, cyclohexyle,
- les radicaux aryles en $C_6$-$C_{10}$ tels que par exemple phényle, naphtyle et
- les radicaux alkylaryles en $C_7$-$C_{15}$ tels que par exemple tolyle, xylyle.

De façon encore plus préférentielle, le polyorganosiloxane réactif **(A)** de la composition d'agent de démoulage **(I)** est un a, w-bis(hydroxy) polydimethylsiloxane ce qui signifie que les radicaux $R^2$, $R^3$ et $R^4$ des motifs siloxyles du polyorganosiloxane réactif **(A)** sont des radicaux méthyles.

De préférence, le polyorganosiloxane réactif **(A)** présente une viscosité dynamique comprise entre 50 et 600000 mPa.s à 25°C ou une consistance comprise entre 200 et 2000 exprimée en dixièmes de millimètres à 25°C.

La viscosité dynamique des silicones est mesurée à 25°C selon la norme ASTM D 445.

Le terme gomme est utilisé pour des composés organosiliciques présentant des viscosités classiquement supérieures à ~600000 mPa.s ce qui correspond à un poids moléculaire supérieur à 260000 g/mole.

La consistance ou pénétrabilité d'une gomme est déterminée à 25°C au moyen d'un pénétromètre de type PNR12 ou modèle équivalent permettant d'appliquer sur l'échantillon une tête cylindrique dans des conditions normalisées.

La pénétrabilité d'une gomme est la profondeur exprimée en dixième de millimètres à laquelle un cylindre calibré pénètre dans l'échantillon pendant une minute.

A cet effet, un échantillon de gomme est introduit dans un godet en aluminium de diamètre 40 mm et d'une hauteur de 60 mm. La tête cylindrique en bronze ou en laiton mesure 6,35 mm de diamètre et 4,76 mm de hauteur et est portée par une tige métallique de 51 mm de long et de 3mm de diamètre qui s'adapte au pénétromètre. Cette tige est lestée d'une surcharge de 100 g. Le poids total de l'ensemble est de 151,8g dont 4,3 pour la pièce cylindrique et sa tige support. Le godet contenant l'échantillon de gomme est mis dans le bain thermostaté à 25 $\pm$ 0,5 °C pendant au minimum 30mn. La mesure est effectuée en suivant la notice du constructeur. Les valeurs de la profondeur (V) en dixième de millimètre et du temps (t) en secondes pour atteindre cette profondeur sont indiquées sur l'appareil. La pénétrabilité est égale à 60V/t exprimée en dixièmes de millimètre par minute.

Les gommes de silicone utilisables conformément à l'invention sont utilisées seules ou en mélange dans un solvant inorganique. Ce solvant peut être choisi parmi les silicones volatiles, l'octamethylcyclotetrasiloxane (D4), le decamethylcylopentasiloxane (D5), les huiles polydiméthylsiloxanes (PDMS), les huiles polyphénylméthylsiloxanes (PPMS) ou leurs mélanges et cela afin d'éviter l'utilisation de solvants organiques préjudiciables à l'environnement et à la santé des travailleurs des ateliers de fabrication des pneumatiques.

Une huile a, $\omega$-bis(hydroxy) polydimethylsiloxane de viscosité dynamique comprise entre 50 et 600000 mPa.s à 25°C et une gomme a, $\omega$-bis(hydroxy) polydimethylsiloxane de consistance comprise entre 200 et 2000 exprimée en dixièmes de millimètres à 25°C sont préférentiellement utilisées en tant que constituants **(A).**

De préférence l'agent réticulant **(B)** de la composition d'agent de démoulage (I) est un polyorganosiloxane choisi parmi ceux qui possèdent au moins un motif de formule (II) et qui sont terminés par des motifs de formule (III) ou des cycliques constitués de motifs de formule (II) représentées ci-dessous :

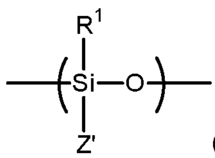
(II)
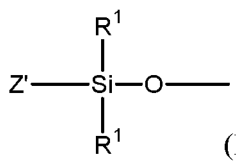
(III)

dans lesquelles :

- les symboles $R^1$, sont identiques ou différents et représentent :

  ◦ un radical alkyle linéaire ou ramifié contenant 1 à 8 atomes de carbone, non substitué ou substitué par au moins un fluor,

◦ un radical cycloalkyle contenant entre 5 et 8 atomes de carbone cycliques, ou
◦ un radical aryle contenant entre 6 et 12 atomes de carbone,
◦ un radical aralkyle ayant une partie alkyle contenant entre 7 et 14 atomes de carbone et une partie aryle contenant entre 6 et 12 atomes de carbone, non substitué ou substitué sur la partie aryle par des halogènes, des alkyles et/ou des alcoxyles contenant 1 à 3 atomes de carbone,

- les symboles Z' sont identiques ou différents et représentent :

  ◦ un radical hydrogène, ou
  ◦ un groupement répondant à la même définition que celle donnée ci-dessus pour $R^1$,

avec par molécule, au moins trois des symboles Z' représentant un radical hydrogène H.

Comme exemple d'agent réticulant **(B)** on peut citer le composé de formule (IV) suivante :

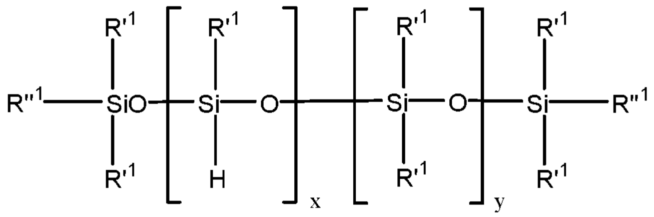

(IV)

dans laquelle :

- x représente un nombre entier ou fractionnaire variant entre 1 et 10000,
- y représente un nombre entier ou fractionnaire variant entre 0 et 10000,
- $R'^1$ et $R''^1$ représentent indépendamment l'un de l'autre :

  · un radical alkyle linéaire ou ramifié contenant 1 à 8 atomes de carbone, non substitué ou substitué par au moins un halogène, de préférence le fluor, les radicaux alkyles étant de préférence méthyle, éthyle, propyle, octyle et 3,3,3-trifluoropropyle,
  · un radical cycloalkyle contenant entre 5 et 8 atomes de carbone cycliques,
  · un radical aryle contenant entre 6 et 12 atomes de carbone,
  · un radical aralkyle ayant une partie alkyle contenant entre 5 et 14 atomes de carbone et une partie aryle contenant entre 6 et 12 atomes de carbone, non substitué ou substituée sur la partie aryle,

- $R''^1$ pouvant également correspondre à l'hydrogène, et

avec la condition selon laquelle le polyorganosiloxane comprend au moins trois motifs ≡SiH.

Conviennent tout particulièrement à l'invention à titre d'agent réticulant (B) les composés suivants :

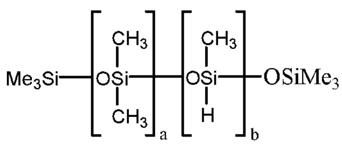

S1

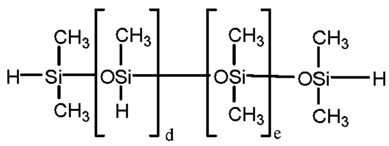

S2

avec a, b, d et e représentant un nombre variant de :

- dans le polymère de formule S1 :

  $0 \leq a \leq 10000$ de préférence $0 \leq a \leq 8000$ de préférence $0 \leq a \leq 5000$, et
  $3 \leq b \leq 10000$ de préférence $10 \leq b \leq 100$ de préférence $20 \leq b \leq 60$

- dans le polymère de formule S2 :

$1 \leq d \leq 10000$ de préférence $20 \leq d \leq 60$, et
$0 \leq e \leq 10000$ de préférence $0 \leq e \leq 1000$.

Dans le cadre de l'invention, on entend par "non réactive" une huile qui dans les conditions d'émulsification, de préparation de la composition lubrifiante et d'utilisation, ne réagit chimiquement avec aucun des constituants de la composition.

De préférence l'huile polyorganosiloxane linéaire non réactive (C) présente une viscosité dynamique de l'ordre de 0,65 à 100000 mPa.s à 25°C. Comme exemple, on peut citer les polyorganosiloxanes linéaires :

- constitués le long de chaque chaîne :
  - des motifs de formule $R^5R^6SiO_{2/2}$, éventuellement associés à des motifs de formule $(R^5)_2SiO_{2/2}$,
  - des motifs de formule $(R^6)_2SiO_{2/2}$, éventuellement associés à des motifs de formule $(R^5)_2SiO_{2/2}$,
  - des motifs de formule $R^5R^6SiO_{2/2}$ et des motifs de formule $(R^6)_2SiO_{2/2}$, éventuellement associés à des motifs de formule $(R^5)_2SiO_{2/2}$,
- et bloqués à chaque extrémité de chaîne par un motif de formule $(R^7)_3SiO_{1/2}$ dont les radicaux $R^7$, identiques ou différents, sont choisis parmi des radicaux $R^5$ et $R^6$ ;
- où les radicaux $R^5$ et $R^6$, substituants organiques monovalents des divers motifs siloxyles mentionnés supra, ont les définitions suivantes :
  - les radicaux $R^5$, identiques ou différents entre eux, sont choisis parmi :
    - les radicaux alkyles linéaires en $C_1$-$C_6$ ou ramifiés en $C_3$-$C_6$ tels que par exemple méthyle, éthyle, propyle, isopropyle, butyle, isobutyle, t-butyle, n-pentyle, n-hexyle,
    - les radicaux cycloalkyles en $C_3$-$C_8$ tels que par exemple cyclopentyle, cyclohexyle, et
    - les radicaux alcényles linéaires en $C_2$-$C_8$ ou ramifiés en $C_3$-$C_8$ tels que par exemple vinyle, allyle,
  - les radicaux $R^6$, identiques ou différents entre eux, sont choisis parmi :
    - les radicaux aryles en $C_6$-$C_{10}$ tels que par exemple phényle, naphtyle,
    - les radicaux alkylaryles en $C_7$-$C_{15}$ tels que par exemple tolyles, xylyle, et
    - les radicaux arylalkyles en $C_7$-$C_{15}$ tels que par exemple benzyle.

La composition chimique des billes de verre **(D)** peut être déterminée par Spectrométrie d'Emission Atomique par Torche à Plasma et selon la Norme ISO 21587 (2007).

De préférence les billes de verre présentent la composition chimique suivante :

- la teneur en silicium exprimée en $SiO_2$ est comprise entre 55% et 63% en poids,
- la teneur en calcium exprimée en CaO est comprise entre 20% et 27% en poids,
- la teneur en sodium exprimée en $Na_2O$ est comprise entre 0,1% et 2,9% en poids,
- la teneur en aluminium exprimée en $Al_2O_3$ est comprise entre 9,1% et 15% en poids,
- la teneur en bore exprimée en $B_2O_3$ est comprise entre 0,2% et 1% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO.

La quantité de billes de verre **(D)** dans la composition d'agent de démoulage (I) varie entre 0,1 et 20 % en poids et de préférence entre 0,1 et 15 % en poids par rapport au poids total de la composition.
De préférence, les billes de verre **(D)** présentent un diamètre moyen des particules mesuré selon la norme ISO 13320 compris entre 0,1 et 150 $\mu$m.

La nature de tensioactif **(E)** sera facilement déterminée par l'homme du métier, l'objectif étant de préparer une émulsion stable. Les tensioactifs anioniques, cationiques, non-ioniques et zwitterioniques peuvent être employés seuls ou en mélange.

Il est à noter que la composition **(I)** selon l'invention peut aussi comprendre des colloïdes protecteurs tels que l'acool polyvinylique.

A titre de tensioactif anionique, on peut mentionner les agents tensio-actifs suivants :

- les alkylesters sulfonates de formule $R^a$-CH($SO_3$M)-COOR$^b$, où $R^a$ représente un radical alkyle en $C_8$-$C_{20}$, de préférence en $C_{10}$-$C_{16}$, $R^b$ un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine),
- les alkylsulfates de formule $R^cOSO_3M$, où $R^c$ représente un radical alkyle ou hydroxyalkyle en $C_{10}$-$C_{24}$, de préférence en $C_{12}$- $C_{20}$, M représentant un atome d'hydrogène ou un cation de même définition que ci- dessus, ainsi que leurs dérivés éthoxylénés (OE) et/ou propoxylénés (OP), présentant de préférence de 1 à 20 motifs OE,
- les alkylamides sulfates de formule $R^d$CONHR$^e$OS0$_3$M où $R^d$ représente un radical alkyle en $C_2$-$C_{22}$, de préférence en $C_6$-$C_{20}$, $R^e$ un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant de préférence 1 à 20 motifs OE,
- les sels d'acides gras saturés ou insaturés en $C_8$-$C_{24}$, de préférence en $C_{14}$-$C_{20}$, les alkylbenzènesulfonates en $C_9$-$C_{20}$, ainsi que leurs dérivés éthoxylénés (OE) et/ou propoxylénés (OP), présentant de préférence 1 à 20 motifs OE, - les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les mono- et dialkylphosphates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine).

A titre de tensioactifs non-ioniques on peut citer les éthers alkyliques ou aryliques de poly(oxyde d'alkylène), l'hexastéarate de sorbitan polyoxyéthyléné, l'oléate de sorbitan polyoxyéthyléné et les éthers de cétylstéaryle et de poly(oxyde d'éthylène). A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.
On peut aussi citer à titre d'exemple de tensioactifs: les tensioactifs fluorés ioniques, non ioniques ou amphotères et leurs mélanges, par exemple:

- les perfluoroalkyles,
- les perfluorobétaïnes,
- les polyfluoroalcools éthoxylés,
- les polyfluoroalkyles d'ammonium,
- les agents tensioactifs dont la partie hydrophile contient un ou plusieurs motif(s) saccharide(s) porteur(s) de cinq à six atomes de carbone et dont la partie hydrophobe contient un motif de formule $R^f(CH_2)_n$-, dans laquelle n = 2 à 20 et Rf représente un motif perfluoroalkyle de formule $C_mF_{2m+1}$, dans laquelle m = 1 à 10; et
- les polyélectrolytes présentant des groupements latéraux perfluoroalkyles gras.

Par agent tensioactif fluoré, on entend, comme cela est parfaitement connu en soi, un composé formé d'une partie perfluorocarbonée aliphatique, comprenant au moins trois atomes de carbone, et une partie hydrophile, ionique, non ionique ou amphotère. La partie perfluorocarbonée d'au moins trois atomes de carbone peut représenter, soit l'ensemble, soit une fraction seulement de la partie fluorocarbonée de la molécule. Concernant ce type de composé, on trouve dans la littérature un grand nombre de références. L'homme du métier pourra se reporter notamment aux références suivantes :

- FR-A-2 149 519, WO-A-94 21 233, US-A-3,194,767, l'ouvrage "Fluorinated Surfactants", Erik Kissa, Editeur Marcel Dekker Inc. (1994) Chapitre 4, notamment les Tableaux 4.1 et 4.4.

On peut citer, en particulier, les produits vendus par la société Du Pont sous la dénomination ZONYL®, par exemple FSO, FSN-100, FS-300, FSD, ainsi que les tensioactifs fluorés de dénomination FORAFAC® distribués par la société DU PONT et les produits vendus sous la dénomination FLUORAD® par la Société 3M.
Parmi ces tensioactifs, on citera, en particulier, les composés perfluoroalkylés anioniques, cationiques, non-ioniques et amphotères, et parmi eux, plus particulièrement, les tensioactifs de la classe des ZONYL® commercialisés par DU Pont, commercialisés par Du Pont respectivement sous les dénominations ZONYL® FSA, ZONYL® FSO, ZONYL® FSC et ZONYL® FSK.
On peut encore préciser à leur propos :

- ZONYL® FSO 100 : CAS 65545-80-4, (non-ionique) 99 à 100 %, le reste étant du 1,4-dioxane,

- ZONYL® FSN : CAS 65545-80-4, 99 à 100 %, le reste étant de l'acétate de sodium et du 1,4-dioxane,
- ZONYL® FS-300 : CAS 65545-80-4, 40 %, le reste étant de 1,4-dioxane (< 0,1%) et de l'eau
- ZONYL®FSD : CAS 70983-60-7 30 %, (cationique), le reste étant de l'hèxylèneglycol (10 %), du chlorure de sodium (3 %) et de l'eau (57 %).

On peut encore citer :

- les perfluoroalkyl bétaïnes (amphotères) telles que celle commercialisée par DU PONT sous la dénomination FORAFAC® 1157, les polyfluoroalcools éthoxylés (non-ioniques), tels que celui commercialisé par DU PONT sous la dénomination FORAFAC 1110 D, les sels polyfluoroalkyl d'ammonium (cationiques), tels que celui commercialisé par DU PONT sous la dénomination FORAFAC 1179;
- les agents tensioactifs dont la partie hydrophile contient un ou plusieurs motif(s) saccharide(s) contenant de 5 à 6 atomes de carbone (motifs dérivés de sucres comme le fructose, le glucose, le mannose, le galactose, le talose, le gulose, l'allose, l'altose, l'idose, l'arabinose, le xylose, le lyxose et/ou le ribose) et dont la partie hydrophobe contient un motif de formule $R^F(CH_2)_n$, où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les monoesters d'acides gras perfluoroalkylés et de sucres comme le sucrose, la fonction monoester pouvant être représentée par la formule $R^F(CH_2)_nC(O)$, où n peut aller de 2 à 10 et $R^F$ représente un motif perfluoroalkyle de formule $C_mF_{2m+1}$ avec m pouvant aller de 4 à 8, décrits dans journal of the american oil chemists' society (JAOCS), Vol. 69, no. 1 (janvier 1992) et choisis parmi ceux présentant les caractéristiques définies ci-dessus; et
- les polyélectrolytes présentant des groupements latéraux perfluoroalkyles gras tels que les polyacrylates présentant des groupements $R^F(CH_2)_n$ où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les polyacrylates présentant des groupements $-CH_2C_7F_{15}$ décrits dans J. Chim. Phys. (1996) 93, 887-898 et choisis parmi ceux présentant les caractéristiques définies ci-dessus.

La quantité de tensioactif **(E)** est fonction du type de chacun des constituants en présence ainsi que de la nature même du tensioactif utilisé. En règle générale, l'émulsion comprend de 0,5 à 10% en poids de tensioactif par rapport au poids total de l'émulsion.
Par ailleurs, de manière classique et non limitative, on peut également mettre en œuvre dans les émulsions des additifs **(F)** tels que des polymères filmogènes, des adjuvants anti-mousses, des biocides, des modificateurs de rhéologie, des agents de coalescence, des agents dispersants, des agents acidifiants, neutralisants, des bases et/ou des agents épaississants seuls ou en mélange.
Les concentrations de tels adjuvants sont connues de l'homme du métier.
Les polyorganosiloxanes de la composition d'agent de démoulage **(I)** sont polymérisables et/ou réticulables par déshydrogéno-condensation (≡SiH + ≡SiOH ---> =Si - O - Si≡ + $H_2$ (g)).
A cet effet, au moins un catalyseur de deshydrogenocondensation peut-etre utilisé. Le catalyseur de déshydrogéno-condensation **(G)** peut-être présent dans la composition selon l'invention. Sa présence n'est qu'optionnelle du fait des températures rencontrées dans le cadre de l'application.
Des exemples de catalyseurs de déshydrogéno-condensation utilisables dans le cadre de l'invention sont les sels organométalliques, et les titanates tels que l'orthotitanate de tétrabutyle.
A titre de sel organométallique, on peut mentionner le naphténate de zirconium et l'octylate de zirconium.
On peut aussi utiliser un composé catalytique à l'étain, généralement un sel d'organoétain. Les sels d'organoétain utilisables sont décrits en particulier dans l'ouvrage de NOLL, Chemistry and Technology of Silicones Academic Press (1968), page 397. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US-A-3862919.
Le produit de réaction d'un silicate d'alkyle ou d'un alkyltrialcoxysilane sur le diacétate de dibutylétain comme décrit dans le brevet belge BE-A-842 305, peut convenir aussi.
Selon une autre possibilité, on peut avoir recours à un sel d'étain II, tel que $SnCl_2$ ou l'octoate stanneux. Le catalyseur peut être un sel d'étain d'un acide organique, tels que le diacétate de dibutylétain, le dilaurate de dibutylétain, le dilaurate de dioctylétain, le dioctate de dibutylétain, l'octylate de cobalt et le di(isomercaptoacétate) de dioctylétain. Des exemples de sels d'étain tels que les bischélates d'étain sont décrits dans les demande de brevet EP-A-147 323 et EP-A-235 049, les dicarboxylates de diorganoétain et, en particulier, les catalyseurs sont décrits dans le brevet britannique GB-A-1 289 900 (diacétate de dibutyl-ou de dioctylétain, le dilaurate de dibutyl- ou de dioctylétain.
Des catalyseurs sans étain sont aussi décrits dans les demandes de brevet WO2010/146253, WO2010146254,

WO2010/149869, WO2010/149870 et WO2013/004926.

Le catalyseur de déshydrogéno-condensation, lorsqu'il est présent, est généralement introduit dans l'émulsion à raison de 0,05 à 5 parties en poids, par rapport au poids total de l'émulsion.

L'eau (H) est présente, de préférence, dans des proportions comprises entre 20 et 90% et de préférence, entre 30 et 80% en poids par rapport au poids total de la composition.

Selon un autre mode de réalisation, la composition d'agent de démoulage **(I)** comprend :

- de 0,1 à 30 parties en poids d'au moins un constituant **(A),**
- de 0,1 à 20 parties en poids d'au moins un constituant **(B),**
- de 0,1 à 30 parties en poids d'au moins un constituant **(C),**
- de 0,1 à 20 parties en poids d'au moins un constituant **(D),**
- de 0,1 à 10 parties en poids d'au moins un constituant **(E),**
- de 0 à 5 parties en poids des constituants **(F),**
- de 0 à 5 parties en poids d'au moins un constituant **(G),**
- de 20 à 90 parties en poids du constituant **(H);**

pour 100 parties en poids de la somme des constituants **(A)** à **(H).**

Selon un autre mode de réalisation préférentiel, la composition d'agent de démoulage (I) comprend :

- de 1 à 20 parties en poids d'au moins un constituant **(A),**
- de 1 à 10 parties en poids d'au moins un constituant **(B),**
- de 1 à 20 parties en poids d'au moins un constituant **(C),**
- de 0,1 à 15 parties en poids d'au moins un constituant **(D),**
- de 0,1 à 10 parties en poids d'au moins un constituant **(E),**
- de 0 à 5 parties en poids des constituants **(F),**
- de 0 à 5 parties en poids d'au moins un constituant **(G),**
- de 30 à 80 parties en poids du constituant **(H);**

pour 100 parties en poids de la somme des constituants **(A)** à **(H).**

Un autre objet de la présente invention concerne un procédé de lubrification **(P1)** d'une vessie en caoutchouc dilatable utile lors d'une vulcanisation d'un pneu cru au sein d'une presse métallique, caractérisé en ce que la surface externe de la dite-vessie amenée à être en contact avec la face interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements silanols ≡SiOH ;

**(b)** au moins un agent réticulant **(B)** ayant, par molécule, au moins trois motifs ≡SiH ;

**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;

**(d)** de 0,1 à 20 parties en poids de billes de verre **(D)** en tant que charge amorphe sphérique dont la composition est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

**(e)** au moins un tensioactif **(E)** ;

**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

**(g)** éventuellement au moins un catalyseur de déshydrogéno-condensation **(G)** ; et

**(h)** de l'eau **(H)** ;

les quantités de tensioactif(s) et d'eau étant suffisantes pour l'obtention d'une émulsion huile-dans-eau;

le dit-procédé permettant ainsi d'obtenir directement une vessie en caoutchouc dilatable lubrifiée sur sa surface externe et conduisant à plusieurs cycles de moulage de pneu cru et de démoulage de pneu vulcanisé.

Il est entendu que les variantes préférées de la composition d'agent de démoulage **(I)** selon l'invention sont aussi des modes de réalisation préférés des procédés **(P1)** et **(P2)** selon l'invention.

La vessie traitée selon le procédé de l'invention présente simultanément d'excellentes propriétés de glissement et de durabilité.

Un autre objet de la présente invention concerne un procédé de lubrification **(P2)** d'une vessie en caoutchouc dilatable utile lors d'une vulcanisation d'un pneu cru au sein d'une presse métallique, caractérisé en ce que dans une première étape à l'extérieur de la presse, la surface interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements ≡SiOH ;

**(b)** au moins un agent réticulant **(B)** ayant, par molécule, au moins trois motifs ≡SiH ;

**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;

**(d)** de 0,1 à 20 parties en poids de billes de verre **(D)** en tant que charge amorphe sphérique dont la composition est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

**(e)** au moins un tensioactif **(E)** ;

**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

**(g)** éventuellement au moins un catalyseur de déshydrogéno-condensation **(G)** ; et

**(h)** de l'eau **(H)** ;

les quantités de tensioactif(s) et d'eau étant suffisantes pour l'obtention d'une émulsion huile-dans-eau ;

la dite-étape permettant ainsi d'obtenir un pneu cru dont la surface interne est revêtue de la dite-composition **(I)** et

lors d'une étape ultérieure au sein de la presse métallique, le pneu cru dont la surface interne est revêtue de la composition **(I)** est mis en contact avec une vessie en caoutchouc dilatable;

le dit-procédé permettant ainsi d'obtenir par transfert une vessie en caoutchouc dilatable lubrifiée sur sa face externe et conduisant à plusieurs cycles de moulage de pneu cru et de démoulage de pneu vulcanisé.

Le nombre de cycles de moulage de pneu cru et de démoulage de pneu vulcanisé est supérieur ou égal à 8.

Les méthodes d'application des traitements sont bien connues de l'homme de l'art. On peut particulièrement

les appliquer par pinceau, éponge, pulvérisation.

L'application par pulvérisation peut être effectuée en plusieurs passages afin de s'assurer que le revêtement est uniforme et homogène.

Selon un autre mode de réalisation, la composition d'agent de démoulage **(I)** mise en œuvre dans le procédé **(P1)** ou **(P2)** selon l'invention, est caractérisé en qu'elle comprend :

- de 0,1 à 30 parties en poids d'au moins un constituant **(A)** comportant par molécule au moins deux groupements silanols ≡SiOH ,
- de 0,1 à 20 parties en poids d'au moins un constituant **(B)** ayant, par molécule, au moins trois motifs ≡SiH,
- de 0,1 à 30 parties en poids d'au moins un constituant **(C),** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$,

- de 0,1 à 20 parties en poids de bille de verre **(D)** en tant que charge amorphe sphérique dont la composition est la suivante :

  - la teneur en silicium exprimée en $SiO_2$ est inférieure à 63% en poids,
  - la teneur en calcium exprimée en CaO est supérieure à 20% en poids,
  - la teneur en sodium exprimée en $Na_2O$ est inférieure à 2,9% en poids,
  - la teneur en aluminium exprimée en $Al_2O_3$ est comprise entre 0,5% et 15% en poids,
  - la teneur en bore exprimée en $B_2O_3$ est comprise entre 0,2% et 2,5% en poids,
  - la teneur en potassium exprimée en $K_2O$ est comprise entre 0,35% et 1% en poids, et
  - la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

- de 0,1 à 10 parties en poids d'au moins un tensioactif **(E),**

- de 0 à 5 parties en poids d'au moins un additif **(F),** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

- de 0 à 5 parties en poids d'au moins un catalyseur de déshydrogéno-condensation **(G)** ;

- de 20 à 90 parties en poids d'eau **(H);**

pour 100 parties en poids de la somme des constituants **(A)** à **(H).**

Un autre objet de la présente invention est de proposer un procédé de vulcanisation d'un pneu cru mettant en œuvre une vessie lubrifiée par le procédé selon l'invention.

Plus particulièrement, l'invention concerne :

- une vessie en caoutchouc, dilatable, revêtue sur sa surface externe d'une composition (I) selon l'invention, pour le façonnage et la vulcanisation de pneus crus;

- une vessie en caoutchouc dilatable pouvant être obtenue par chauffage de la vessie dilatable définie ci-dessus, notamment entre 80 et 220° C, de préférence entre 150 et 200° C, de façon à assurer la réticulation totale des constituants réticulables de l'émulsion ;

- un pneu cru revêtu sur sa surface interne d'une composition lubrifiante (I) selon l'invention.

Une fois lubrifiée la vessie diffère d'une vessie dilatable classique en ce qu'elle est recouverte d'un film silicone réticulé incrusté de billes de verre **(D)** dont la composition chimique est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,

- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO.

Les autres composés constitutifs de l'émulsion à l'exception des composés volatils (par exemple l'eau) sont présents dans le film silicone à la surface de la vessie.

Le film de silicone incrusté de billes de verre **(D)** à la surface de la vessie n'est pas éliminé facilement puisqu'il résiste à plusieurs cycles de moulage du pneu cru et de démoulage du pneu vulcanisé. Le nombre de cycles de moulage de pneu cru et de démoulage de pneu vulcanisé est supérieur ou égal à 8.

Les compositions selon l'invention présentent une stabilité améliorée en termes de pH et de dégagement d'hydrogène ce qui minimise les risques d'hygiène et de sécurité pour les opérateurs et les installations industrielles et les revêtements silicone préparés à partir des compositions selon l'invention présentent simultanément :

- un aspect de surface transparent,
- de bonne propriété de lubrification (Kd < 0.7),et
- une bonne résistance aux démoulages successifs (nombre de démoulages > 8).

D'autres avantages et caractéristiques de la présente invention apparaîtront à la lecture des exemples suivants donnés à titre illustratif nullement limitatif.

**EXEMPLES**

**1) Matières premières utilisées**

**Bluesil® Emulsion 242** vendue par la Sté Bluestar Silicones : émulsion d'huile α, ω-bis(hydroxy) polydimethylsiloxane de viscosité approximativement 135 000 mPa.s à 25°C **(A)** et comprenant un tensioactif **(E).**

**Bluesil® Emulsion 247G** - Sté Bluestar Silicones : émulsion d'un mélange de gomme α, ω-bis(hydroxy) polydimethylsiloxane **(A)** de consistance approximativement 700 exprimé en dixième de millimètre à 25°C et d'huile polydimethylsiloxane **(C)** de viscosité approximativement 50 mPa.s à 25°C et comprenant un tensioactif **(E).**

**Bluesil® Emulsion 269** vendue par la Sté Bluestar Silicones : émulsion d'huile Méthyle hydrogeno polysiloxane de viscosité approximativement 25 $mm^2/s$ à 25°C **(B)** et comprenant un tensioactif **(E).**

**Spheriglass® 3000A CP00** vendue par la Sté Potters : billes de verre sodo calcique non revêtues d'un agent de couplage, de diamètre moyen 12-26μm **(D)** mesuré selon la norme ISO 13320 (type A).

**Spheriglass® 3000E CP03** vendue par la Sté Potters : billes de verre borosilicate revêtue en surface par un agent de couplage, de diamètre moyen 12-26μm **(D)** mesuré selon la norme ISO 13320 (type E)

**GlassyCoat® C3 SP 20-60 TO** vendue par la Sté Sovitec : billes de verre non revêtue en surface D50 15-30 μm (type X)

**Rhodopol® 23** vendue par la Sté Solvay Novecare : Gomme Xanthane, epaississant **(F). Imbentin® T/050** vendu par la Sté Dr Kolb : Isotrideceth 5, agent mouillant **(F).**

**Silcolapse® 5001** vendue par la Sté Bluestar Silicones : émulsion antimousse **(F).**

**Proxel® GXL** vendu par la Sté Arch Chemicals : 1, 2-benzisothiazolin-. 3-one, biocide **(F).** Les % indiqués ci-dessous sont en poids par rapport au poids total de la composition.

**2) Préparation des exemples**

Dans tous les exemples, les pourcentages (%) mentionnés sont exprimés en poids par rapport au poids total de tous les constituants de la formulation.

**Exemple Comparatif 1 (C1) : Formulation avec billes de verre de type A**

Dans un bécher de 2 litres et de diamètre 120mm, réaliser un premier mélange (M1) :

- Introduire 47,46 % d'eau (H) et agiter à 100 tours/mn à l'aide d'un disperseur équipé d'une turbine défloculeuse de diamètre 100mm ;
- Introduire ensuite 0,62% Imbentin® T/050 (F), 1,8% Silcolapse® 5001 (F) et 3% Spheriglass® 3000A CP00;
- Augmenter la vitesse à 600 tours/mn et introduire 0,26% Rhodopol®23 (F);
- Disperser pendant 10 mn à 600 tours/mn et arrêter le disperseur.

Parallèlement dans un bécher de 1 litre et de diamètre 90mm, préparer un second mélange (M2) :

- introduire 30% Bluesil® Emulsion 247G (A & C) et agiter à 100 tours/mn à l'aide d'un disperseur équipé d'une ancre de diamètre 80mm puis,
- introduire 7,47% Bluesil® Emulsion 242 (A), 0,15% Proxel® GXL (F), 0,06% d'acide phosphorique (F), et homogénéiser pendant 5mn et
- enfin introduire 9,15% Bluesil® Emulsion 269 (B).
- Homogénéiser pendant 5 mn

Enfin, introduire le mélange (M2) dans (M1) sous agitation à 300 tours/mn à l'aide d'un disperseur équipé d'une ancre de 80 mm de diamètre et homogénéiser pendant 30 mn. Après homogénéisation on obtient la composition d'agent de démoulage (C1).

**Exemple Comparatif 2 (C2)** : **Formulation avec billes de verre de type E**

Dans un bécher de 2 litres et de diamètre 120mm, réaliser un premier mélange (Q1) :

- Introduire 47,91 % d'eau (H) et agiter à 100 tours/mn à l'aide d'un disperseur équipé d'une turbine défloculeuse de diamètre 100mm ;
- Introduire ensuite 0,2% Imbentin® T/050 (F), 1,8% Silcolapse® 5001 (F) et 3% **Spheriglass® 3000E CP03;**
- Augmenter la vitesse à 600 tours/mn et introduire 0,26% Rhodopol®23 (F);
- Disperser pendant 10 mn à 600 tours/mn et arrêter le disperseur.

Parallèlement dans un bécher de 1 litre et de diamètre 90mm, préparer un second mélange (Q2) :

- introduire 30% Bluesil® Emulsion 247G (A & C) et agiter à 100 tours/mn à l'aide d'un disperseur équipé d'une ancre de diamètre 80mm puis,
- introduire 7,48% Bluesil® Emulsion 242 (A), 0,15% Proxel® GXL (F), 0,06% d'acide phosphorique (F), et homogénéiser pendant 5mn et
- enfin introduire 9,15% Bluesil® Emulsion 269 (B).
- Homogénéiser pendant 5 mn

Enfin, introduire le mélange (Q2) dans (Q1) sous agitation à 300 tours/mn à l'aide d'un disperseur équipé d'une ancre de 80 mm de diamètre et homogénéiser pendant 30 mn. Après homogénéisation on obtient la composition d'agent de démoulage (C2).

**Exemple selon l'invention (E1)** : **Formulation avec billes de verre de type X**

On procède comme dans l'exemple comparatif 2 mais les billes de verre de type E sont remplacées par des billes de verre de type X **GlassyCoat® C3 SP 20-60 TO lot 1.**

**Exemple selon l'invention (E2)** : **Formulation avec billes de verre de type X**

On procède comme dans l'exemple comparatif 2 mais les billes de verre de type E sont remplacées par des billes de verre de type X **GlassyCoat® C3 SP 20-60 TO lot 2.**

**Exemple selon l'invention (E3)** : **Formulation avec billes de verre de type X**

On procède comme dans l'exemple comparatif 2 mais les billes de verre de type E sont remplacées par des billes de verre de type X **GlassyCoat® C3 SP 20-60 TO lot 3.**

**3) Tests de caractérisation**

**Analyse élémentaire des lots de billes de verre (D)** :

L'analyse élémentaire des lots de billes de verre s'effectue par Spectrométrie d'Emission Atomique par Torche à Plasma et selon la Norme ISO 21587 (2007). On peut citer comme exemple d'appareil utilisable : ICP Varian Vista Pro ou ICP Jobin Yvon Ultima 2.

## Mesure du pH des formulations

Le pH des formulations est mesuré à l'aide d'un pH-mètre équipé d'une électrode de verre et d'une électrode de référence. L'étalonnage de l'appareil est effectué toutes les semaines avec des solutions tampons de pH =4, 7 et 11. Les mesures sont effectuées à la température ambiante du laboratoire. L'appareil compense automatiquement les variations de température de la mesure.

## Mesure du dégagement d'hydrogène des formulations

La mesure du dégagement d'hydrogène sur des compositions stockées à 50°C s'effectue par chromatographie en phase gazeuse équipée d'une détection catharométrique. Les résultats de l'analyse sont exprimés en ml/kg/jour.
Les propriétés des compositions d'agent de démoulage (I) sont mesurées par évaluation des coefficients de friction et le nombre de démoulages réalisés sans défaut.
Un coefficient de friction faible reflète de bonnes propriétés de glissement.
Un nombre de démoulages élevé reflète une durabilité élevée de la lubrification de la vessie.
Les tests de mesure des coefficients de friction et de la durabilité ont été adaptés à l'application de la composition lubrifiante sur vessie dilatable en caoutchouc.

## Test de glissement

L'objectif de ce test est d'apprécier le pouvoir glissant d'une composition d'agent de démoulage placée à l'interface entre la vessie dilatable et la surface interne de l'enveloppe d'un pneumatique.
Ce test est réalisé en faisant glisser sur une surface de caoutchouc, dont la composition est celle de la vessie dilatable, un patin métallique de poids déterminé, sous lequel est fixé un film d'enveloppe de pneumatique (50 x 75 mm).
La surface de la vessie dilatable est préalablement revêtue par la composition d'agent de démoulage.
Le coefficient de friction est mesuré à l'aide d'un tensiomètre (à la vitesse de 50 mm/min). Cinq passages successifs sont réalisés sur le même échantillon de vessie dilatable en changeant à chaque fois l'échantillon d'enveloppe de pneumatique.
Le coefficient de friction (Kd) correspond à :

$$\text{Kd (sans dimension)} = \frac{\text{Force moyenne pour entraîner le patin (en N)}}{\text{Poids du patin (en N)}}$$

La valeur de Kd mentionné dans le tableau 1 correspond à la moyenne des valeurs obtenues lors des 5 passages.
Plus les valeurs du coefficient de friction sont faibles et meilleures seront les propriétés de glissement de la composition lubrifiante.
Ce test de glissement est parfaitement représentatif des performances à atteindre sur l'outil industriel, c'est un premier critère de sélection.

## Test de démoulage :

La durabilité d'une composition lubrifiante correspond au nombre de pneumatiques réalisés sans dégradation de la surface de la vessie dilatable.
Pour ce faire, un film de vessie dilatable, préalablement revêtu par la composition d'agent de démoulage à évaluer, est pressé au contact d'un film d'enveloppe de pneumatique, non vulcanisé, selon une série de cycles de pressions et de températures simulant les étapes de fabrication d'un pneumatique sur l'outil industriel.
Dans le détail, une feuille en caoutchouc, de composition identique à celui de la vessie et de taille 2mmx80mmx80mm est préparée dans une presse chauffante à 200°C pendant 30 minutes. La feuille est structurée en surface pour simuler la surface d'une vessie.
La feuille est revêtue en cabine de peinture par pulvérisation avec un pistolet à air comprimé de la composition d'agent de démoulage. On dépose une couche de 20 μm environ. Après séchage à l'air, l'ensemble est cuit à 170°C pendant au moins 10 minutes.
La feuille revêtue est placée dans un moule métallique dans une presse. Les plaques sont chauffées à 170°C. On laisse préchauffer la feuille pendant 5 minutes, puis on dépose un morceau de caoutchouc ILR cru (« Inner Liner Rubber (ILR)» = caoutchouc qui constitue la surface interne d'un pneumatique cru) d'une épaisseur d'environ 9 cm sur la feuille revêtue de la composition d'agent de démoulage. On ferme le moule, puis la presse et on laisse cuire le caoutchouc ILR pendant 7 minutes à 170°C. On ouvre le moule et on retire la fine feuille ILR moulée.

Pour qu'on considère qu'un démoulage est réussi, elle doit se séparer sans forcer ni accrocher. Sinon on note l'échec du démoulage.

Le nombre de démoulages correspond au nombre de feuilles ILR démoulées sans accroche.

**4) Analyse élémentaires des différents types de billes de verre**

| **Composition du verre % massique** | Billes de verre type A | Billes de verre type E | Billes de verre type X | | |
|---|---|---|---|---|---|
| | | | Lot 1 | Lot 2 | Lot 3 |
| $SiO_2$(%) | 74,5 | 64,2 | 61,4 | 62,1 | 57,9 |
| $Na_2O$ (%) | 12,4 | 3,2 | 0,5 | 2,5 | 2,2 |
| CaO (%) | 9,2 | 18 | 22,5 | 22,5 | 24,4 |
| MgO (%) | 2,6 | 2,4 | 2,6 | 3,0 | 3,0 |
| $Al_2O_3$ (%) | 0,9 | 9 | 12,3 | 9,2 | 11,2 |
| $B_2O_3$ (%) | 0,1 | 3 | 0,4 | 0,3 | 0,8 |
| $K_2O$ (%) | 0,3 | 0,2 | 0,4 | 0,5 | 0,6 |
| **TOTAL** | **100** | **100** | **100** | **100** | **100** |

Les billes de verre de type X présentent les caractéristiques souhaitées à savoir :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO.

**5) Suivi du pH des compositions formulées avec les différentes billes de verre stockées à 50°C**

| Nombre de jours de stockage à 50°C | Essai Comparatif C1 Billes de verre type A | Essai Comparatif C2 Billes de verre type E | Essais selon l'invention Billes de verre type X | | |
|---|---|---|---|---|---|
| | | | E1 Lot 1 | E2 Lot 2 | E3 Lot 3 |
| 0 | 4,7 | 4,2 | 4,2 | 4,7 | 4,3 |
| 11 | 7,0 | 6,2 | 4,5 | 4,9 | 4,5 |
| 15 | 7,1 | 6,5 | 4,4 | 4,8 | 4,5 |
| 30 | 7,2 | 6,8 | 4,2 | 4,8 | 4,5 |
| 45 | 7,2 | 7,6 | 4,3 | 4,7 | 4,5 |
| 60 | 7,3 | - | 3,7 | 5,0 | 4,4 |

Comparativement aux essais comparatifs C1 et C2, dont le pH évolue rapidement et fortement à 50°C (+ 49% en 11 jours et + 55% en 60 jours pour C1), le pH des compositions selon l'invention (E1, E2 et E3) à savoir en présence de billes de verre de type X n'évolue pratiquement pas (+ 4% en 11 jours et 6,4% en 60 jours pour E2). Le pH des compositions selon l'invention n'augmente pas au stockage de plus de 10% relatif durant une période de 60 jours à

50°C équivalent à un an à température ambiante.

6) Mesure du dégagement d'hydrogène durant le stockage des compositions formulées avec les différentes billes de verre

| **Dégagement d'hydrogène exprimé en ml/kg/jour Stockage à 50°C pendant 50 jours** | | | | |
|---|---|---|---|---|
| Essai Comparatif C1 Billes de verre type A | Essai Comparatif C2 Billes de verre type E | Essais selon l'invention Billes de verre type X | | |
| | | E1 Lot 1 | E2 Lot 2 | E3 Lot 3 |
| 110 | 85 | 30 | 50 | 55 |

Le dégagement d'hydrogène d'une composition d'agent de démoulage selon l'invention est en moyenne de 45 ml/kg/jour à 50°C soit une diminution de 59 % par rapport à l'exemple comparatif C1 et une diminution de 47% par rapport à la composition de l'exemple comparatif C2.

**7)** Mesure du coefficient de friction des revêtements obtenus avec les compositions formulées avec les différentes billes de verre

| Nombre de mois de stockage à température ambiante | **Coefficient de friction (Kd)** | |
|---|---|---|
| | Essai Comparatif C1 | Essais selon l'invention Billes de verre type X |
| | Billes de verre type A | E2 Lot 2 |
| 1 | 0,33 | 0,29 |
| 2 | 0,37 | 0,31 |
| 3 | 0,36 | 0,33 |
| 4 | 0,39 | 0,3 |

La composition selon l'invention conduit à un coefficient de friction Kd < 0,7.

**8)** Mesure du nombre de démoulages des compositions formulées avec les différentes billes de verre

| Nombre de mois de stockage à température ambiante | **Nombre de démoulages** | |
|---|---|---|
| | Essai Comparatif C1 | Essais selon l'invention Billes de verre type X |
| | Billes de verre type A | E2 Lot 2 |
| 1 | 10 | 14 |
| 2 | 8 | 12 |
| 3 | 6 | 12 |
| 4 | 6 | 8 |

L'utilisation de billes de verre de type X dans la composition selon l'invention ne dégrade pas le nombre de démoulages.

Comparativement à l'exemple comparatif (C1), l'utilisation de billes de verre de type X dans une composition

d'agent de démoulage ne dégrade pas le nombre de démoulages et donc la durabilité de la vessie et cela simultanément à de bonnes propriétés de glissement.

En conclusion, l'utilisation de billes de verre de type X, contrairement aux billes de verre de type A ou E, permettent de stabiliser le pH des compositions d'agent de démoulage et d'éviter la perte de SiH donc le dégagement d'hydrogène et cela sans dégrader les propriétés d'application.

**Revendications**

1. Composition d'agent de démoulage **(I)** sous forme d'émulsion comprenant :

   **(a)** au moins un polyorganosiloxane réactif **(A)** comportant par molécule au moins deux groupements silanols ≡SiOH ;
   **(b)** au moins un agent réticulant **(B)** ayant, par molécule, au moins trois motifs ≡SiH ;
   **(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
   **(d)** de 0,1 à 20 parties en poids de billes de verre **(D)** en tant que charge amorphe sphérique ;
   **(e)** au moins un tensioactif **(E)** ;
   **(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
   **(g)** éventuellement au moins un catalyseur de déshydrogéno-condensation **(G)** ; et
   **(h)** de l'eau **(H)** ;

   les quantités de tensioactif(s) et d'eau étant suffisantes pour l'obtention d'une émulsion huile-dans-eau;
   **caractérisée en ce que** la composition des billes de verre **(D)** est la suivante :

   - la teneur en silicium exprimée en $SiO_2$ est inférieure à 63% en poids,
   - la teneur en calcium exprimée en CaO est supérieure à 20% en poids,
   - la teneur en sodium exprimée en $Na_2O$ est inférieure à 2,9% en poids,
   - la teneur en aluminium exprimée en $Al_2O_3$ est comprise entre 0,5% et 15% en poids,
   - la teneur en bore exprimée en $B_2O_3$ est comprise entre 0,2% et 2,5% en poids,
   - la teneur en potassium exprimée en $K_2O$ est comprise entre 0,35% et 1% en poids, et
   - la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO.

2. Composition d'agent de démoulage **(I)** selon la revendication 1, **caractérisée** en que la quantité de billes de verre (D) est comprise entre 0,1 et 15 % en poids par rapport au poids total de la composition.

3. Composition d'agent de démoulage **(I)** selon la revendication 1 **caractérisée en ce que** le polyorganosiloxane réactif **(A)** comprend les motifs siloxyles suivants :

   $$M^{OH} = [(OH)(R^2)_2SiO_{1/2}] \text{ et } D= [R^3R^4SiO_{2/2}]$$

   dans lesquels :

   - $R^2$, $R^3$ et $R^4$ sont des radicaux, identiques ou différents, choisis parmi le groupe constitué par :

     - les radicaux alkyles linéaires ou ramifiés en $C_1$-$C_6$
     - les radicaux cycloalkyles en $C_3$-$C_8$,
     - les radicaux aryles en $C_6$-$C_{10}$ et
     - les radicaux alkylaryles en $C_7$-$C_{15}$.

4. Composition d'agent de démoulage **(I)** selon la revendication 3, caractérisé en que les radicaux $R^2$, $R^3$ et $R^4$ des motifs siloxyles du polyorganosiloxane réactif **(A)** sont des radicaux méthyles.

**5.** Composition d'agent de démoulage **(I)** selon la revendication 1, caractérisé en que l'agent réticulant **(B)** est un polyorganosiloxane choisi parmi ceux qui possèdent au moins un motif de formule (II) et qui sont terminés par des motifs de formule (III) ou cycliques constitués de motifs de formule (II) représentées ci-dessous :

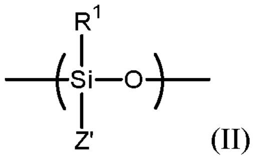 (II) 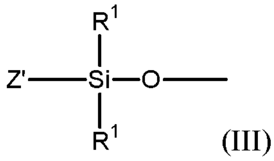 (III)

dans lesquelles :

les symboles $R^1$, sont identiques ou différents et représentent :

- un radical alkyle linéaire ou ramifié contenant 1 à 8 atomes de carbone, non substitué ou substitué par au moins un fluor,
- un radical cycloalkyle contenant entre 5 et 8 atomes de carbone cycliques, ou
- un radical aryle contenant entre 6 et 12 atomes de carbone,
- une radical aralkyle ayant une partie alkyle contenant entre 5 et 14 atomes de carbone et une partie aryle contenant entre 6 et 12 atomes de carbone, non substitué ou substitué sur la partie aryle par des halogènes, des alkyles et/ou des alcoxyles contenant 1 à 3 atomes de carbone,

les symboles Z' sont identiques ou différents et représentent :

- un radical hydrogène, ou
- un groupement répondant à la même définition que celle donnée ci-dessus pour $R^1$, avec par molécule, au moins trois des symboles Z' représentant H.

**6.** Procédé de lubrification **(P1)** d'une vessie en caoutchouc dilatable utile lors d'une vulcanisation d'un pneu cru au sein d'une presse métallique, **caractérisé en ce que** la surface externe de la dite-vessie amenée à être en contact avec la face interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements silanols ≡SiOH ;
**(b)** au moins un agent réticulant **(B)** ayant, par molécule, au moins trois motifs ≡SiH ;
**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
**(d)** de 0,1 à 20 parties en poids de billes de verre **(D)** en tant que charge amorphe sphérique dont la composition est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

**(e)** au moins un tensioactif **(E)** ;
**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

(**g**) éventuellement au moins un catalyseur de déshydrogéno-condensation **(G)** ; et
**(h)** de l'eau **(H)** ;
les quantités de tensioactif(s) et d'eau étant suffisantes pour l'obtention d'une émulsion huile-dans-eau;
le dit-procédé permettant ainsi d'obtenir directement une vessie en caoutchouc dilatable lubrifiée sur sa surface externe et conduisant à plusieurs cycles de moulage de pneu cru et de démoulage de pneu vulcanisé.

**7.** Procédé de lubrification **(P2)** d'une vessie en caoutchouc dilatable utile lors d'une vulcanisation d'un pneu cru au sein d'une presse métallique, **caractérisé en ce que** dans une première étape à l'extérieur de la presse, la surface interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements ≡SiOH ;
**(b)** au moins un agent réticulant **(B)** ayant, par molécule, au moins trois motifs ≡SiH ;
**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
**(d)** de 0,1 à 20 parties en poids de billes de verre **(D)** en tant que charge amorphe sphérique dont la composition est la suivante :

- la teneur en silicium exprimée en $SiO_2$ est inférieure à 63% en poids,
- la teneur en calcium exprimée en CaO est supérieure à 20% en poids,
- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

**(e)** au moins un tensioactif **(E)** ;
**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
**(g)** éventuellement au moins un catalyseur de déshydrogéno-condensation **(G)** ; et
**(h)** de l'eau **(H)** ;
les quantités de tensioactif(s) et d'eau étant suffisantes pour l'obtention d'une émulsion huile-dans-eau ;
la dite-étape permettant ainsi d'obtenir un pneu cru dont la surface interne est revêtue de la dite-composition **(I)** et lors d'une étape ultérieure au sein de la presse métallique, le pneu cru dont la surface interne est revêtue de la composition **(I)** est mis en contact avec une vessie en caoutchouc dilatable;
le dit-procédé permettant ainsi d'obtenir par transfert une vessie en caoutchouc dilatable lubrifiée sur sa face externe et conduisant à plusieurs cycles de moulage de pneu cru et de démoulage de pneu vulcanisé.

**8.** Procédé selon l'une quelconque des revendications 6 ou 7, caractérisé en que la composition d'agent de démoulage **(I)** comprend :

- de 0,1 à 30 parties en poids d'au moins un constituant **(A)** comportant par molécule au moins deux groupements silanols ≡SiOH ,
- de 0,1 à 20 parties en poids d'au moins un constituant **(B)** ayant, par molécule, au moins trois motifs ≡SiH,
- de 0,1 à 30 parties en poids d'au moins un constituant **(C),** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$,
- de 0,1 à 20 parties en poids de billes de verre **(D)** en tant que charge amorphe sphérique dont la composition est la suivante :

  - la teneur en silicium exprimée en $SiO_2$ est inférieure à 63% en poids,
  - la teneur en calcium exprimée en CaO est supérieure à 20% en poids,

- la teneur en sodium exprimée en $Na_2O$ est inférieure à 2,9% en poids,
- la teneur en aluminium exprimée en $Al_2O_3$ est comprise entre 0,5% et 15% en poids,
- la teneur en bore exprimée en $B_2O_3$ est comprise entre 0,2% et 2,5% en poids,
- la teneur en potassium exprimée en $K_2O$ est comprise entre 0,35% et 1% en poids, et
- la teneur en magnésium exprimée en MgO est comprise entre 1% et 4% en poids, par rapport au poids total de $SiO_2$, CaO, $Na_2O$, $Al_2O_3$, $B_2O_3$, $K_2O$ et MgO;

- de 0,1 à 10 parties en poids d'au moins un tensioactif **(E),**
- de 0 à 5 parties en poids d'au moins un additif **(F),** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
- de 0 à 5 parties en poids d'au moins un catalyseur de déshydrogéno-condensation **(G)** ;
- de 20 à 90 parties en poids d'eau **(H);**

pour 100 parties en poids de la somme des constituants **(A)** à **(H).**

**9.** Vessie dilatable lubrifiée obtenue par le procédé tel que décrit selon l'une quelconque des revendications 6 à 8.

**10.** Procédé de vulcanisation d'un pneu cru **caractérisé en ce qu'**il met en œuvre une vessie lubrifiée telle que décrite dans la revendication 9.

**Patentansprüche**

**1.** Formtrennmittelzusammensetzung **(I)** in Emulsionsform, umfassend:

**(a)** mindestens ein reaktives Polyorganosiloxan **(A)** mit mindestens zwei Silanolgruppen ≡SiOH pro Molekül;
**(b)** mindestens ein Vernetzungsmittel **(B)** mit mindestens drei ≡SiH-Einheiten pro Molekül;
**(c)** mindestens ein unreaktives lineares Polyorganosiloxanöl **(C),** bei dem es sich um ein lineares Homopolymer oder Copolymer handelt, das pro Molekül gleiche oder verschiedene, an die Siliciumatome gebundene einwertige organische Substituenten aufweist, die aus der Gruppe bestehend aus $C_1$-$C_6$-Alkylresten, $C_3$-$C_8$-Cycloalkylresten, $C_6$-$C_{10}$-Arylresten und $C_7$-$C_{15}$-Alkylarylresten ausgewählt sind;
**(d)** 0,1 bis 20 Gewichtsteile Glaskugeln **(D)** als kugelförmigen amorphen Füllstoff;
**(e)** mindestens ein Tensid **(E);**
**(f)** gegebenenfalls mindestens ein Additiv **(F),** das aus der Gruppe bestehend aus einem filmbildenden Polymer, einem ergänzenden Schmiermittel, einem reibungsmindernden Mittel, einem Koaleszenzmittel, einem Netz- oder Dispergiermittel, einem mineralischen Füllstoff, einem Antischaummittel, einem Verdicker, einem Stabilisator, einem Ansäuerungsmittel, einem Biozid und einem Antipilzmittel ausgewählt ist;
**(g)** gegebenenfalls mindestens einen Dehydrokondensationskatalysator **(G)** und
**(h)** Wasser **(H);**

wobei die Mengen an Tensid bzw. Tensiden und Wasser zum Erhalt einer Öl-in-Wasser-Emulsion ausreichen; **dadurch gekennzeichnet, dass** die Glaskugeln **(D)** folgende Zusammensetzung aufweisen:

- der Gehalt an Silicium, ausgedrückt als $SiO_2$, liegt unter 63 Gew.-%,
- der Gehalt an Calcium, ausgedrückt als CaO, liegt über 20 Gew.-%,
- der Gehalt an Natrium, ausgedrückt als $Na_2O$, liegt unter 2,9 Gew.-%,
- der Gehalt an Aluminium, ausgedrückt als $Al_2O_3$, liegt zwischen 0,5 und 15 Gew.-%,
- der Gehalt an Bor, ausgedrückt als $B_2O_3$, liegt zwischen 0,2 und 2,5 Gew.-%,
- der Gehalt an Kalium, ausgedrückt als $K_2O$, liegt zwischen 0,35 und 1 Gew.-%, und
- der Gehalt an Magnesium, ausgedrückt als MgO, liegt zwischen 1 und 4 Gew.-%,

bezogen auf das Gesamtgewicht von $SiO_2$, CaO, $Na_2O$, $Al_2O_3$, $B_2O_3$, $K_2O$ und MgO.

**2.** Formtrennmittelzusammensetzung **(I)** nach Anspruch 1, **dadurch gekennzeichnet, dass** die Menge an Glaskugeln (D) zwischen 0,1 und 15 Gew.-%, bezogen auf das Gesamtgewicht der Zusammensetzung, liegt.

**3.** Formtrennmittelzusammensetzung **(I)** nach Anspruch 1, **dadurch gekennzeichnet, dass** das reaktive Polyorganosiloxan **(A)** die folgenden Siloxyleinheiten umfasst:

$$M^{OH} = [(OH)(R^2)_2SiO_{1/2}] \text{ und } D = [R^3R^4SiO_{2/2}],$$

in denen:

- $R^2$, $R^3$ und $R^4$ für gleiche oder verschiedene Reste aus der Gruppe bestehend aus
  - linearen oder verzweigten $C_1$-$C_6$-Alkylresten,
  - $C_3$-$C_8$-Cycloalkylresten,
  - $C_6$-$C_{10}$-Arylresten und
  - $C_7$-$C_{15}$-Alkylarylresten

stehen.

**4.** Formtrennmittelzusammensetzung **(I)** nach Anspruch 3, **dadurch gekennzeichnet, dass** es sich bei den Resten $R^2$, $R^3$ und $R^4$ der Siloxyleinheiten des reaktiven Polyorganosiloxans **(A)** um Methylreste handelt.

**5.** Formtrennmittelzusammensetzung **(I)** nach Anspruch 1, **dadurch gekennzeichnet, dass** es sich bei dem Vernetzungsmittel **(B)** um ein Polyorganosiloxan handelt, das aus denjenigen ausgewählt ist, die mindestens eine Einheit der Formel (II) aufweisen und die durch Einheiten der Formel (III) oder cyclische Einheiten, die aus Einheiten der Formel (II) bestehen, die nachstehend wiedergegeben sind, terminiert sind:

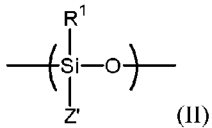
(II)
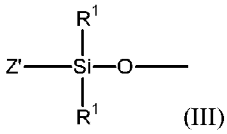
(III) ,

in denen:

die Symbole $R^1$ gleich oder verschieden sind und für Folgendes stehen:

- einen linearen oder verzweigten Alkylrest mit 1 bis 8 Kohlenstoffatomen, der unsubstituiert oder durch mindestens ein Fluor substituiert ist,
- einen Cycloalkylrest mit zwischen 5 und 8 cyclischen Kohlenstoffatomen oder
- einen Arylrest mit zwischen 6 und 12 Kohlenstoffatomen,
- einen Aralkylrest mit einem Alkylteil mit zwischen 5 und 14 Kohlenstoffatomen und einem Arylteil mit zwischen 6 und 12 Kohlenstoffatomen, der unsubstituiert oder am Arylteil durch Halogene, Alkylgruppen und/oder Alkoxygruppen mit 1 bis 3 Kohlenstoffatomen substituiert ist,

die Symbole Z' gleich oder verschieden sind und für Folgendes stehen:

- einen Wasserstoffrest oder
- eine Gruppe, die der gleichen Definition entspricht wie oben für $R^1$ angegeben,

wobei pro Molekül mindestens drei der Symbole Z' für H stehen.

**6.** Verfahren zum Schmieren **(P1)** einer dehnbaren Kautschukblase, die bei der Vulkanisation eines Reifenrohlings in einer Metallpresse verwendet werden kann, **dadurch gekennzeichnet, dass** die Außenoberfläche der Blase, die mit der Innenseite des Reifenrohlings in Kontakt stehen soll, mit einer Formtrennmittelzusammensetzung **(I)** in Form einer Öl-in-Wasser-Emulsion, umfassend:

**(a)** mindestens ein reaktives Polyorganosiloxan **(A)** mit mindestens zwei Silanolgruppen ≡SiOH pro Molekül;
**(b)** mindestens ein Vernetzungsmittel **(B)** mit mindestens drei ≡SiH-Einheiten pro Molekül;
**(c)** mindestens ein unreaktives lineares Polyorganosiloxanöl **(C),** bei dem es sich um ein lineares Homopolymer oder Copolymer handelt, das pro Molekül gleiche oder verschiedene, an die Siliciumatome gebundene einwertige organische Substituenten aufweist, die aus der Gruppe bestehend aus $C_1$-$C_6$-Alkylresten, $C_3$-$C_8$-Cycloalkylresten, $C_6$-$C_{10}$-Arylresten und $C_7$-$C_{15}$-Alkylarylresten ausgewählt sind;
**(d)** 0,1 bis 20 Gewichtsteile Glaskugeln **(D)** als kugelförmigen amorphen Füllstoff mit folgender Zusammensetzung:

- der Gehalt an Silicium, ausgedrückt als $SiO_2$, liegt unter 63 Gew.-%,
- der Gehalt an Calcium, ausgedrückt als CaO, liegt über 20 Gew.-%,
- der Gehalt an Natrium, ausgedrückt als $Na_2O$, liegt unter 2,9 Gew.-%,
- der Gehalt an Aluminium, ausgedrückt als $Al_2O_3$, liegt zwischen 0,5 und 15 Gew.-%,
- der Gehalt an Bor, ausgedrückt als $B_2O_3$, liegt zwischen 0,2 und 2,5 Gew.-%,
- der Gehalt an Kalium, ausgedrückt als $K_2O$, liegt zwischen 0,35 und 1 Gew.-%, und
- der Gehalt an Magnesium, ausgedrückt als MgO, liegt zwischen 1 und 4 Gew.-%,

bezogen auf das Gesamtgewicht von $SiO_2$, CaO, $Na_2O$, $Al_2O_3$, $B_2O_3$, $K_2O$ und MgO;
**(e)** mindestens ein Tensid **(E);**
**(f)** gegebenenfalls mindestens ein Additiv **(F),** das aus der Gruppe bestehend aus einem filmbildenden Polymer, einem ergänzenden Schmiermittel, einem reibungsmindernden Mittel, einem Koaleszenzmittel, einem Netz- oder Dispergiermittel, einem mineralischen Füllstoff, einem Antischaummittel, einem Verdicker, einem Stabilisator, einem Ansäuerungsmittel, einem Biozid und einem Antipilzmittel ausgewählt ist;
**(g)** gegebenenfalls mindestens einen Dehydrokondensationskatalysator **(G)** und
**(h)** Wasser **(H);**
wobei die Mengen an Tensid bzw. Tensiden und Wasser zum Erhalt einer Öl-in-Wasser-Emulsion ausreichen;
beschichtet wird;
wobei das Verfahren es auf diese Weise ermöglicht, direkt eine dehnbare Kautschukblase, die auf ihrer Außenfläche geschmiert ist, zu erhalten, und zu mehreren Zyklen des Formens eines Reifenrohlings und des Entformens eines vulkanisierten Reifens führt.

**7.** Verfahren zum Schmieren **(P2)** einer dehnbaren Kautschukblase, die bei der Vulkanisation eines Reifenrohlings in einer Metallpresse verwendet werden kann, **dadurch gekennzeichnet, dass** in einem ersten Schritt außerhalb der Presse die Innenoberfläche des Reifenrohlings mit einer Formtrennmittelzusammensetzung (I) in Form einer Öl-in-Wasser-Emulsion, umfassend:

**(a)** mindestens ein reaktives Polyorganosiloxan **(A)** mit mindestens zwei Silanolgruppen ≡SiOH pro Molekül;
**(b)** mindestens ein Vernetzungsmittel **(B)** mit mindestens drei ≡SiH-Einheiten pro Molekül;
**(c)** mindestens ein unreaktives lineares Polyorganosiloxanöl **(C)**, bei dem es sich um ein lineares Homopolymer oder Copolymer handelt, das pro Molekül gleiche oder verschiedene, an die Siliciumatome gebundene einwertige organische Substituenten aufweist, die aus der Gruppe bestehend aus $C_1$-$C_6$-Alkylresten, $C_3$-$C_8$-Cycloalkylresten, $C_6$-$C_{10}$-Arylresten und $C_7$-$C_{15}$-Alkylarylresten ausgewählt sind;
**(d)** 0,1 bis 20 Gewichtsteile Glaskugeln **(D)** als kugelförmigen amorphen Füllstoff mit folgender Zusammensetzung:

- der Gehalt an Silicium, ausgedrückt als $SiO_2$, liegt unter 63 Gew.-%,
- der Gehalt an Calcium, ausgedrückt als CaO, liegt über 20 Gew.-%,
- der Gehalt an Natrium, ausgedrückt als $Na_2O$, liegt unter 2,9 Gew.-%,
- der Gehalt an Aluminium, ausgedrückt als $Al_2O_3$, liegt zwischen 0,5 und 15 Gew.-%,
- der Gehalt an Bor, ausgedrückt als $B_2O_3$, liegt zwischen 0,2 und 2,5 Gew.-%,
- der Gehalt an Kalium, ausgedrückt als $K_2O$, liegt zwischen 0,35 und 1 Gew.-%, und
- der Gehalt an Magnesium, ausgedrückt als MgO, liegt zwischen 1 und 4 Gew.-%,

bezogen auf das Gesamtgewicht von $SiO_2$, CaO, $Na_2O$, $Al_2O_3$, $B_2O_3$, $K_2O$ und MgO;
**(e)** mindestens ein Tensid **(E);**
**(f)** gegebenenfalls mindestens ein Additiv **(F),** das aus der Gruppe bestehend aus einem filmbildenden Polymer, einem ergänzenden Schmiermittel, einem reibungsmindernden Mittel, einem Koaleszenzmittel, einem Netz- oder Dispergiermittel, einem mineralischen Füllstoff, einem Antischaummittel, einem Verdicker, einem Stabilisator, einem Ansäuerungsmittel, einem Biozid und einem Antipilzmittel ausgewählt ist;
**(g)** gegebenenfalls mindestens einen Dehydrokondensationskatalysator **(G)** und
**(h)** Wasser **(H);**
wobei die Mengen an Tensid bzw. Tensiden und Wasser zum Erhalt einer Öl-in-Wasser-Emulsion ausreichen;

beschichtet wird;
wobei der Schritt es auf diese Weise ermöglicht, einen Reifenrohling, dessen Innenoberfläche mit der Zusammensetzung **(I)** beschichtet ist, zu erhalten, und
bei einem nachfolgenden Schritt in der Metallpresse der Reifenrohling, dessen Innenoberfläche mit der Zusammensetzung **(I)** beschichtet ist, mit einer dehnbaren Kautschukblase in Kontakt gebracht wird;
wobei das Verfahren es auf diese Weise ermöglicht, eine dehnbare Kautschukblase, die auf ihrer Außenseite geschmiert ist, zu erhalten und zu mehreren Zyklen des Formens eines Reifenrohlings und des Entformens eines vulkanisierten Reifens führt.

**8.** Verfahren nach einem der Ansprüche 6 oder 7, **dadurch gekennzeichnet, dass** die Formtrennmittelzusammensetzung **(I)** Folgendes umfasst:

- 0,1 bis 30 Gewichtsteile mindestens eines Bestandteils **(A)** mit mindestens zwei Silanolgruppen ≡SiOH pro Molekül;
- 0,1 bis 20 Gewichtsteile mindestens eines Bestandteils **(B)** mit mindestens drei ≡SiH-Einheiten pro Molekül;
- 0,1 bis 30 Gewichtsteile mindestens eines Bestandteils **(C),** bei dem es sich um ein lineares Homopolymer oder Copolymer handelt, das pro Molekül gleiche oder verschiedene, an die Siliciumatome gebundene einwertige organische Substituenten aufweist, die aus der Gruppe bestehend aus $C_1$-$C_6$-Alkylresten, $C_3$-$C_8$-Cycloalkylresten, $C_6$-$C_{10}$-Arylresten und $C_7$-$C_{15}$-Alkylarylresten ausgewählt sind;
- 0,1 bis 20 Gewichtsteile Glaskugeln **(D)** als kugelförmigen amorphen Füllstoff mit folgender Zusammensetzung:

  - der Gehalt an Silicium, ausgedrückt als $SiO_2$, liegt unter 63 Gew.-%,
  - der Gehalt an Calcium, ausgedrückt als CaO, liegt über 20 Gew.-%,
  - der Gehalt an Natrium, ausgedrückt als $Na_2O$, liegt unter 2,9 Gew.-%,
  - der Gehalt an Aluminium, ausgedrückt als $Al_2O_3$, liegt zwischen 0,5 und 15 Gew.-%,
  - der Gehalt an Bor, ausgedrückt als $B_2O_3$, liegt zwischen 0,2 und 2,5 Gew.-%,
  - der Gehalt an Kalium, ausgedrückt als $K_2O$, liegt zwischen 0,35 und 1 Gew.-%, und
  - der Gehalt an Magnesium, ausgedrückt als MgO, liegt zwischen 1 und 4 Gew.-%,

bezogen auf das Gesamtgewicht von $SiO_2$, CaO, $Na_2O$, $Al_2O_3$, $B_2O_3$, $K_2O$ und MgO;

  - 0,1 bis 10 Gewichtsteile mindestens eines Tensids **(E);**
  - 0 bis 5 Gewichtsteile mindestens eines Additivs **(F),** das aus der Gruppe bestehend aus einem filmbildenden Polymer, einem ergänzenden Schmiermittel, einem reibungsmindernden Mittel, einem Koaleszenzmittel, einem Netz- oder Dispergiermittel, einem mineralischen Füllstoff, einem Antischaummittel, einem Verdicker,

einem Stabilisator, einem Ansäuerungsmittel, einem Biozid und einem Antipilzmittel ausgewählt ist;

  - 0 bis 5 Gewichtsteile mindestens eines Dehydrokondensationskatalysators **(G);**
  - 20 bis 90 Gewichtsteile Wasser **(H);**

pro 100 Gewichtsteile der Summe der Bestandteile **(A)** bis **(H)**.

**9.** Geschmierte dehnbare Blase, erhalten durch das Verfahren gemäß einem der Ansprüche 6 bis 8.

**10.** Verfahren zur Vulkanisation eines Reifenrohlings, **dadurch gekennzeichnet, dass** dabei eine geschmierte Blase gemäß Anspruch 9 verwendet wird.

## Claims

**1.** Mould-release agent composition **(I)** in the form of an emulsion comprising:

**(a)** at least one reactive polyorganosiloxane **(A)** comprising at least two silanol ≡SiOH groups per molecule;
**(b)** at least one crosslinking agent **(B)** having at least three ≡SiH units per molecule;
**(c)** at least one non-reactive linear polyorganosiloxane oil **(C)** which is a linear homopolymer or copolymer which has, per molecule, monovalent organic substituents, which are identical to or different from one another, bonded to the silicon atoms, and which are chosen from the group consisting of $C_1$-$C_6$ alkyl, $C_3$-$C_8$ cycloalkyl, $C_6$-$C_{10}$

aryl and $C_7$-$C_{15}$ alkylaryl radicals;
**(d)** from 0.1 to 20 parts by weight of glass beads **(D)** as spherical amorphous filler;
**(e)** at least one surfactant **(E);**
**(f)** optionally at least one additive **(F)** chosen from the group consisting of: a film-forming polymer, a complementary lubricant, an anti-friction agent, a coalescence agent, a wetting or dispersing agent, a mineral filler, an antifoam agent, a thickener, a stabilizer, an acidifying agent, a biocide and an antifungal agent;
**(g)** optionally at least one dehydrocondensation catalyst **(G);** and
**(h)** water **(H);**

the amounts of surfactant(s) and of water being sufficient to obtain an oil-in-water emulsion;
**characterized in that** the composition of the glass beads **(D)** is as follows:

- the silicon content expressed as $SiO_2$ is less than 63% by weight,
- the calcium content expressed as CaO is greater than 20% by weight,
- the sodium content expressed as $Na_2O$ is less than 2.9% by weight,
- the aluminium content expressed as $Al_2O_3$ is between 0.5% and 15% by weight,
- the boron content expressed as $B_2O_3$ is between 0.2% and 2.5% by weight,
- the potassium content expressed as $K_2O$ is between 0.35% and 1% by weight, and
- the magnesium content expressed as MgO is between 1% and 4% by weight,

relative to the total weight of $SiO_2$, CaO, $Na_2O$, $Al_2O_3$, $B_2O_3$, $K_2O$ and MgO.

2. Mould-release agent composition **(I)** according to Claim 1, **characterized in that** the amount of glass beads (D) is between 0.1% and 15% by weight relative to the total weight of the composition.

3. Mould-release agent composition **(I)** according to Claim 1, **characterized in that** the reactive polyorganosiloxane **(A)** comprises the following siloxyl units:

$$M^{OH} = [(OH)(R^2)_2SiO_{1/2}] \text{ and } D = [R^3R^4SiO_{2/2}]$$

in which:

- $R^2$, $R^3$ and $R^4$ are radicals which are identical or different and are chosen from the group consisting of:

  - linear or branched $C_1$-$C_6$ alkyl radicals,
  - $C_3$-$C_8$ cycloalkyl radicals,
  - $C_6$-$C_{10}$ aryl radicals and
  - $C_7$-$C_{15}$ alkylaryl radicals.

4. Mould-release agent composition **(I)** according to Claim 3, **characterized in that** the radicals $R^2$, $R^3$ and $R^4$ of the siloxyl units of the reactive polyorganosiloxane **(A)** are methyl radicals.

5. Mould-release agent composition **(I)** according to Claim 1, **characterized in that** the crosslinking agent **(B)** is a polyorganosiloxane chosen from those which have at least one unit of formula (II) and which are terminated by units of formula (III) or are cyclic consisting of units of formula (II) represented below:

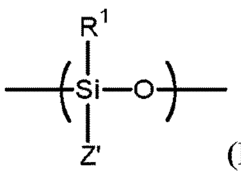
(II)
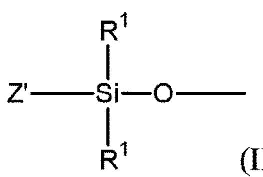
(III)

in which:

the symbols $R^1$ are identical or different and represent:

- a linear or branched alkyl radical containing 1 to 8 carbon atoms, which is unsubstituted or substituted by

at least one fluorine,
- a cycloalkyl radical containing between 5 and 8 cyclic carbon atoms, or
- an aryl radical containing between 6 and 12 carbon atoms,
- an aralkyl radical having an alkyl part containing between 5 and 14 carbon atoms and an aryl part containing between 6 and 12 carbon atoms, which is unsubstituted or substituted on the aryl part by halogens, alkyls and/or alkoxyls containing from 1 to 3 carbon atoms,

the symbols Z' are identical or different and represent:

- a hydrogen radical, or
- a group meeting the same definition as that given above for $R^1$,

with at least three of the symbols Z' per molecule representing H.

6. Process for lubrication **(P1)** of an expandable rubber bladder of use during a vulcanization of a green tyre within a metal press, **characterized in that** the outer surface of said bladder which is brought to be in contact with the inner face of said green tyre is coated with a mould-release agent composition **(I)** in the form of an oil-in-water emulsion comprising:

**(a)** at least one reactive polyorganosiloxane **(A)** comprising at least two silanol ≡SiOH groups per molecule;
**(b)** at least one crosslinking agent **(B)** having at least three ≡SiH units per molecule;
**(c)** at least one non-reactive linear polyorganosiloxane oil **(C)** which is a linear homopolymer or copolymer which has, per molecule, monovalent organic substituents, which are identical to or different from one another, bonded to the silicon atoms, and which are chosen from the group consisting of $C_1$-$C_6$ alkyl, $C_3$-$C_8$ cycloalkyl, $C_6$-$C_{10}$ aryl and $C_7$-$C_{15}$ alkylaryl radicals;
**(d)** from 0.1 to 20 parts by weight of glass beads **(D)** as spherical amorphous filler, the composition of which is as follows:

- the silicon content expressed as $SiO_2$ is less than 63% by weight,
- the calcium content expressed as CaO is greater than 20% by weight,
- the sodium content expressed as $Na_2O$ is less than 2.9% by weight,
- the aluminium content expressed as $Al_2O_3$ is between 0.5% and 15% by weight,
- the boron content expressed as $B_2O_3$ is between 0.2% and 2.5% by weight,
- the potassium content expressed as $K_2O$ is between 0.35% and 1% by weight, and
- the magnesium content expressed as MgO is between 1% and 4% by weight,

relative to the total weight of $SiO_2$, CaO, $Na_2O$, $Al_2O_3$, $B_2O_3$, $K_2O$ and MgO;
**(e)** at least one surfactant **(E);**
**(f)** optionally at least one additive **(F)** chosen from the group consisting of: a film-forming polymer, a complementary lubricant, an anti-friction agent, a coalescence agent, a wetting or dispersing agent, a mineral filler, an antifoam agent, a thickener, a stabilizer, an acidifying agent, a biocide and an antifungal agent;
**(g)** optionally at least one dehydrocondensation catalyst **(G);** and
**(h)** water **(H);**

the amounts of surfactant(s) and of water being sufficient to obtain an oil-in-water emulsion;
said process thus making it possible to directly obtain an expandable rubber bladder lubricated on the outer surface thereof and leading to a plurality of cycles of green tyre moulding and vulcanized tyre demoulding.

7. Process for lubrication **(P2)** of an expandable rubber bladder of use during a vulcanization of a green tyre within a metal press, **characterized in that**, in a first step outside of the press, the inner surface of said green tyre is coated with a mould-release agent composition **(I)** in the form of an oil-in-water emulsion comprising:

**(a)** at least one reactive polyorganosiloxane **(A)** comprising at least two ≡SiOH groups per molecule;
**(b)** at least one crosslinking agent **(B)** having at least three ≡SiH units per molecule;
**(c)** at least one non-reactive linear polyorganosiloxane oil **(C)** which is a linear homopolymer or copolymer which has, per molecule, monovalent organic substituents, which are identical to or different from one another, bonded to the silicon atoms, and which are chosen from the group consisting of $C_1$-$C_6$ alkyl, $C_3$-$C_8$ cycloalkyl, $C_6$-$C_{10}$ aryl and $C_7$-$C_{15}$ alkylaryl radicals;

**(d)** from 0.1 to 20 parts by weight of glass beads **(D)** as spherical amorphous filler, the composition of which is as follows:

- the silicon content expressed as $SiO_2$ is less than 63% by weight,
- the calcium content expressed as CaO is greater than 20% by weight,
- the sodium content expressed as $Na_2O$ is less than 2.9% by weight,
- the aluminium content expressed as $Al_2O_3$ is between 0.5% and 15% by weight,
- the boron content expressed as $B_2O_3$ is between 0.2% and 2.5% by weight,
- the potassium content expressed as $K_2O$ is between 0.35% and 1% by weight, and
- the magnesium content expressed as MgO is between 1% and 4% by weight,

relative to the total weight of $SiO_2$, CaO, $Na_2O$, $Al_2O_3$, $B_2O_3$, $K_2O$ and MgO;
**(e)** at least one surfactant **(E);**
**(f)** optionally at least one additive **(F)** chosen from the group consisting of: a film-forming polymer, a complementary lubricant, an anti-friction agent, a coalescence agent, a wetting or dispersing agent, a mineral filler, an antifoam agent, a thickener, a stabilizer, an acidifying agent, a biocide and an antifungal agent;
**(g)** optionally at least one dehydrocondensation catalyst **(G);** and
**(h)** water **(H);**
the amounts of surfactant(s) and of water being sufficient to obtain an oil-in-water emulsion;
said step thus making it possible to obtain a green tyre the inner surface of which is coated with said composition **(I)** and
during a later step within the metal press, the green tyre the inner surface of which is coated with the composition **(I)** is brought into contact with an expandable rubber bladder;
said process thus making it possible to obtain, by transfer, an expandable rubber bladder lubricated on the outer face thereof and leading to a plurality of cycles of green tyre moulding and vulcanized tyre demoulding.

**8.** Process according to either one of Claims 6 and 7, **characterized in that** the mould-release agent composition **(I)** comprises:

- from 0.1 to 30 parts by weight of at least one constituent **(A)** comprising at least two silanol ≡SiOH groups per molecule,
- from 0.1 to 20 parts by weight of at least one constituent **(B)** having at least three ≡SiH units per molecule,
- from 0.1 to 30 parts by weight of at least one constituent **(C)** which is a linear homopolymer or copolymer which has, per molecule, monovalent organic substituents, which are identical to or different from one another, bonded to the silicon atoms, and which are chosen from the group consisting of $C_1$-$C_6$ alkyl, $C_3$-$C_8$ cycloalkyl, $C_6$-$C_{10}$ aryl and $C_7$-$C_{15}$ alkylaryl radicals,
- from 0.1 to 20 parts by weight of glass beads **(D)** as spherical amorphous filler, the composition of which is as follows:

  - the silicon content expressed as $SiO_2$ is less than 63% by weight,
  - the calcium content expressed as CaO is greater than 20% by weight,
  - the sodium content expressed as $Na_2O$ is less than 2.9% by weight,
  - the aluminium content expressed as $Al_2O_3$ is between 0.5% and 15% by weight,
  - the boron content expressed as $B_2O_3$ is between 0.2% and 2.5% by weight,
  - the potassium content expressed as $K_2O$ is between 0.35% and 1% by weight, and
  - the magnesium content expressed as MgO is between 1% and 4% by weight,

relative to the total weight of $SiO_2$, CaO, $Na_2O$, $Al_2O_3$, $B_2O_3$, $K_2O$ and MgO;

- from 0.1 to 10 parts by weight of at least one surfactant **(E),**
- from 0 to 5 parts by weight of at least one additive **(F)** chosen from the group consisting of: a film-forming polymer, a complementary lubricant, an anti-friction agent, a coalescence agent, a wetting or dispersing agent, a mineral filler, an antifoam agent, a thickener, a stabilizer, an acidifying agent, a biocide and an antifungal agent;
- from 0 to 5 parts by weight of at least one dehydrocondensation catalyst **(G);**
- from 20 to 90 parts by weight of water **(H);**

per 100 parts by weight of the sum of constituents **(A)** to **(H).**

**9.** Lubricated expandable bladder obtained by the process as described in any one of Claims 6 to 8.

**10.** Process for vulcanization of a green tyre, **characterized in that** it employs a lubricated bladder as described in Claim 9.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 022706 A
- EP 1240283 A
- EP 1495076 A
- EP 2038354 A
- EP 1899447 A
- US 4840742 A
- WO 2015090547 A
- GB 1082179 A
- FR 2149519 A
- WO 9421233 A
- US 3194767 A
- US 3862919 A
- BE 842305 A
- EP 147323 A
- EP 235049 A
- GB 1289900 A
- WO 2010146253 A
- WO 2010146254 A
- WO 2010149869 A
- WO 2010149870 A
- WO 2013004926 A


### Littérature non-brevet citée dans la description


- Fluorinated Surfactants. Marcel Dekker Inc, 1994
- *journal of the american oil chemists' society (JAOCS),* Janvier 1992, vol. 69 (1
- *J. Chim. Phys.,* 1996, vol. 93, 887-898
- **NOLL.** Chemistry and Technology of Silicones. Academic Press, 1968, 397